(19) Europäisches Patentamt
European Patent Office
Office européen des brevets

(11) **EP 3 506 172 B1**

(12) **FASCICULE DE BREVET EUROPEEN**

(45) Date de publication et mention de la délivrance du brevet:
**18.11.2020 Bulletin 2020/47**

(51) Int Cl.:
*G06N 3/04* *(2006.01)*   *H04L 27/00* *(2006.01)*
*H04L 27/233* *(2006.01)*   *H04L 25/03* *(2006.01)*

(21) Numéro de dépôt: **18215810.5**

(22) Date de dépôt: **22.12.2018**

(54) **RÉTRO-PROPAGATION D'ERREUR POUR UNE CHAINE DE DÉMODULATION EN AVEUGLE D'UN SIGNAL DE TÉLÉCOMMUNICATION NUMÉRIQUE**

RÜCK-PROPAGATION FÜR EINE BLINDE DEMODULATIONSKETTE EINES DIGITALEN TELEKOMMUNIKATIONSSIGNALS

ERROR RETRO-PROPAGATION FOR A BLIND DEMODULATION CHAIN OF A DIGITAL TELECOMMUNICATION SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2017 FR 1701418**

(43) Date de publication de la demande:
**03.07.2019 Bulletin 2019/27**

(73) Titulaire: **Avantix**
**13794 Aix-en-Provence (FR)**

(72) Inventeur: **COURTAT, Thomas**
**75014 PARIS (FR)**

(74) Mandataire: **Debay, Damien et al**
**Debay IP**
**126 Résidence Elysée 2**
**18, avenue de la Jonchère**
**78170 La Celle-Saint-Cloud (FR)**

(56) Documents cités:
**EP-A1- 0 372 613**   **FR-A1- 3 030 964**
**US-A1- 2013 216 005**

• **TREICHLER J R ET AL: "Practical implementations of blind demodulators", SIGNALS, SYSTEMS & COMPUTERS, 1997. CONFERENCE RECORD OF THE THIRTY-FI RST ASILOMAR CONFERENCE ON PACIFIC GROVE, CA, USA 2-5 NOV. 1997, LOS ALAMITOS, CA, USA,IEEE COMPUT. SOC, US, 2 novembre 1997 (1997-11-02), page 1028, XP032140332, DOI: 10.1109/ACSSC.1997.679062 ISBN: 978-0-8186-8316-9**
• **JOHN R TREICHLER ET AL: "Practical Blind Demodulators for High-Order QAM Signals", PROCEEDINGS OF THE IEEE, IEEE. NEW YORK, US, vol. 86, no. 10, 1 octobre 1998 (1998-10-01), XP011044107, ISSN: 0018-9219**

**Description**

DOMAINE TECHNIQUE DE L'INVENTION

La présente invention concerne généralement les méthodes et systèmes de traitement du signal en télécommunications numériques, et plus particulièrement la démodulation aveugle de signaux mono-polarisation et bipolarisation.

ARRIERE-PLAN TECHNOLOGIQUE DE L'INVENTION

En télécommunications numériques, un émetteur cherche à transmettre une suite de bits d'information à un (ou plusieurs) récepteur(s). L'émetteur effectue une suite d'opérations de codage afin de rendre possible la transmission de l'information sur un support physique que l'on appelle aussi canal de propagation (tel qu'une fibre optique, ou tel qu'est plus particulièrement le cas ici, par propagation non contrainte dans l'espace). Ce canal de propagation n'est, généralement, pas parfait dans le sens où le signal reçu n'est pas une réplique exacte du signal émis (perturbations thermiques, réverbérations, dispersion, imperfections de la chaine radiofréquence). Au niveau de l'émetteur, on se donne une constellation (par exemple une modulation ASK pour « Amplitude-shift keying » ou modulation par déplacement d'amplitude ,PSK pour « Phase-shift keying » ou modulation par changement de phase ou encore M-QAM pour « Quadrature amplitude modulation » ou modulation d'amplitude en quadrature à M états) qui est un ensemble fini de symboles dans le plan complexe et une fonction qui à nombre défini de bits consécutifs associant un symbole de la constellation. Chaque symbole de la suite est multiplié par une forme d'onde continue (ou filtre de mise en forme), décalée dans le temps pour former le signal en bande de base. Ce signal en bande de base est transposé à une certaine fréquence, dite fréquence porteuse, puis émis par une interface radio (une antenne dans le cas d'une transmission sans fil). A la réception, on effectue les opérations inverses pour reconstituer les bits d'information à partir du signal mesuré sur l'interface radio. Notamment, la démodulation est l'opération qui identifie à la réception les symboles effectivement émis par l'émetteur à partir du signal reçu.

En télécommunications coopératives, la plupart des paramètres sont définis par contrat entre l'émetteur et le récepteur (fréquence de porteuse, type de constellation, décalage temporel entre les formes d'onde, puissance d'émission). Les seules inconnues qui subsistent sont d'éventuelles erreurs de synchronisation et l'effet du canal de propagation. Ces paramètres sont, en général, estimés par émission régulière de séquences, dites pilotes connues des deux parties. L'opération compensant les effets du canal avant démodulation est appelée égalisation.

En télécommunications non coopératives ou « aveugle », en revanche, tout ou partie des paramètres est inconnue, ou connue en ordre de grandeur seulement, et il n'y a pas de séquences pilotes pour faciliter l'égalisation.

Les documents (S. Barembruch, « Méthodes approchées de maximum de vraisemblances pour la classification et identification aveugles en communications numériques », rapport de thèse, Telecom ParisTech, 7 mars 2011) et (E. Punskaya, « Sequential Monte Carlo methods for digital communications », rapport de thèse, université de Cambridge, 2003) présentent deux méthodes proches fondées sur l'algorithme EM (pour « Expectation Maximization ») permettant de démoduler en aveugle des signaux de télécommunication. Cependant ces approches quoique de complexité réduite ne permettent pas de traiter des signaux de grand débit en temps réel, elles sont focalisées sur la compensation du canal de propagation et ne permettent pas de compenser les autres distorsions du signal (synchronisation, phase, dérive de porteuse...). Elles ne permettent pas de suivre les variations temporelles des paramètres. Elles ne permettent pas non plus de traiter des signaux sur plusieurs polarisation.

Un des buts du brevet FR3030964 est de proposer des méthodes permettant de séparer et de démoduler en aveugle deux signaux de télécommunication modulés linéairement, sur une seule voie et superposés en fréquence en utilisant un algorithme d'espérance maximisation et des techniques de filtrage particulaire. Si cette méthode permet de suivre les variations temporelles des paramètres, elle est encore trop demandeuse en temps de calcul pour pouvoir suivre un signal de grand débit en temps réel et pour de grands ordres de modulation.

DESCRIPTION GENERALE DE L'INVENTION

La présente invention a pour but de pallier certains inconvénients de l'art antérieur en proposant une solution permettant d'optimiser et de faciliter la démodulation en aveugle des signaux de télécommunication numérique pour définir le plus précisément possible les caractéristiques des signaux, tout en rendant possible l'implémentation en temps réel.

A cet effet, la présente invention concerne une méthode temps réel de démodulation aveugle de signaux de télécommunication numérique, à partir de l'observation d'une version échantillonnée de ce signal

La méthode comprend les étapes suivantes :

- acquisition par un échantillonnage d'une première pluralité d'échantillons du signal pour constituer chacune une entrée d'un réseau de L blocs de traitement aussi appelés ici « neurones spécialisés », chaque neurone étant simulé par les sorties du bloc précédent, la première pluralité d'échantillons du signal étant soumise en entrée au premier bloc simulant un premier neurone du réseau pour générer une pluralité de sorties du premier bloc; chaque neurone $F_i$ étant stimulé par les sorties d'une chaine amont $G_i$ et stimulant une chaine aval $H_i$ ; chaque jeu d'échantillons parcourt la même chaine de traitement ;
- les sorties des derniers blocs du réseau correspondent idéalement aux symboles démodulés ;
- ajout d'une non linéarité à chacune des sorties du dernier bloc du réseau permettant de calculer un signal d'erreur et propagation de cette erreur dans le sens inverse de la chaine de traitement (« retropropagation ») ;
- estimation à réception par chaque neurone (i) de l'erreur d'un terme correctif $\delta\theta_i$ et mise à jour dans chaque bloc de la valeur du paramètre $\theta_i$ selon $\theta_i += \delta\theta_i$.

Et que chaque neurone du réseau réalise spécifiquement :

- un traitement d'une fonction « Next », implémentée et mise en œuvre dans un sous bloc logique de traitement $\left(F_i^{(N)}\right)$, pour générer des sorties à partir d'une pluralité d'observation du signal de télécommunication numérique reçue et les transmettre au bloc de traitement du neurone suivant du réseau ; cette fonction s'écrit de façon générale sous la forme $(X_{i+1,0}, \cdots X_{i+1,m_i-1}) = \text{next}(X_{i,0}, \cdots, X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$ ;
- un traitement d'une fonction « Propagate », implémentée et mise en œuvre dans un sous bloc logique « Propagate » $\left(F_i^{(P)}\right)$ pour calculer des erreurs $(e_{i+1,0}, \cdots, e_{i+1,m_i-1})$ fournies par le bloc $F_{i+1}^{(P)}$ ou par $(e_{L-1,0}, \cdots, e_{L-1,N-1}) = (e_0, \cdots, e_{N-1})$ avec $e_j = \overline{z_j - y_j}$ en bout de chaine soit à l'entrée $F_{L-1}^{(P)}$, pour le i-ème neurone, cette fonction s'écrit de façon générale sous la forme $(e_{i,0}, \cdots, e_{i,m_i-1}) = \text{propagate}(e_{i+1,0}, \cdots, e_{i+1,m_i-1})$
- un traitement d'une fonction « Update » , implémentée et mise en œuvre dans un sous bloc logique « Update » $\left(F_i^{(U)}\right)$, pour calculer des paramètres correctif $\delta\theta_i$ à appliquer à la valeur courante du paramètre mémorisé en interne $\theta_i$ à partir des erreurs $(e_{i+1,0}, \cdots, e_{i+1,m_i-1})$ renvoyées par le sous bloc $F_{i+1}^{(P)}$, cette fonction s'écrit de façon générale sous la forme $\delta\theta_i = \text{update}(e_{i+1,0}, \cdots, e_{i+1,m_i-1})$.

Selon une autre particularité, chaque neurone comprend au moins une implémentation et une mise en œuvre d'une suite de traitements élémentaires de la forme :

- le sous bloc $F_i^{(N)}$ réalise $(X_{i+1,0}, \cdots, X_{i+1,m_i-1}) = \text{next}(X_{i,0}, \cdots, X_{i,m_i-1})$, $X_{ij} \in K^{q_{ij}}$ avec $q_{ij}$ un entier et $K$ un espace des nombres réels ou un espace des nombres complexes
- le sous bloc $F_i^{(p)}$ réalise $(e_{i,0}, \cdots, e_{i,m_i-1}) = \text{propagate}(e_{i+1,0}, \cdots, e_{i+1,m_i-1})$
- le SOUS bloc $F_i^{(U)}$ réalise $\delta\theta_i = \text{update}(e_{i+1,0}, \cdots, e_{i+1,m_i-1})$

Selon une autre particularité, l'ajout de la non-linéarité à la sortie du dernier bloc $\left(H_i^{(N)}\right)$ du réseau est mise en œuvre par la fonction :
$z_j = \text{NL}(y_j)$ dans laquelle

- $z_j$ est un signal sortant d'un organe de décision du dernier bloc
- $y_j$ est un échantillon égalisé ou démodulé
- le bloc de décision étant défini par la comparaison du résultat obtenu par la sortie y du bloc phase avec une constellation finie de résultats possibles mémorisés par le bloc de décision, et décidant de prendre parmi les résultats possibles, celui dont la distance avec le point représentatif de la sortie y est la plus petite

# EP 3 506 172 B1

Selon une autre particularité, la rétropropagation des erreurs calculées est obtenue par les traitements, implémentés et mise en œuvre par un algorithme de rétropropagation des erreurs, suivants :

- Initialisation de la rétropropagation sous la forme
  pour $0 \leq k < N,\ e_{L,k} = \overline{z_k - y_k}$

- Propagation des erreurs par le sous-neurone $F_i^{(P)}$ dans la fonction $(e_{i,0}, \cdots, e_{i,m_i-1}) = \text{propagate}(e_{i+1,0}, \cdots, e_{i+1,m_{i+1}-1})$ selon les calculs

$$\forall 0 \leq j < m_i,\ e_{i,j} = \sum_k e_{i+1,k} \cdot \frac{\partial F_{i,k}}{\partial x_{i,j}}$$

Selon une autre particularité, la mise à jour des paramètres internes $\theta_i$ de chaque neurone $F_i$ est obtenue dans le sous neurone $F_i^{(U)}$ par les traitements, implémentés et mise en œuvre dans la fonction $\delta\theta_i = \text{update}(e_{i+1,0}, \cdots, e_{i+1,m_{i+1}-1})$ selon :

  ◦ Calcul de $\Delta_i$ :
  - Pour $0 \leq j < M_{i+1},\ D_{i,j} = e_{i+1,j} \cdot \frac{\partial F_{i,j}^{(N)}}{\partial \theta_i}$
  - $\Delta_i = \sum_j D_{i,j}$

  ◦ Mise à jour de $\theta_i$ :
  - $\theta_i \mathrel{+}= 2\mu\Re(\Delta_i)$ si $\theta_i$ est dans un **R** espace vectoriel
  - $\theta_i \mathrel{+}= 2\mu\Delta_i$ si $\theta_i$ est dans un **C** espace vecoriel

Avec - $\mu_i$ un paramètre réel appelé « vitesse d'apprentissage »

- $\delta\theta_i$ est un paramètre correctif du paramètre $\theta_i$
- $D_{ij}$ est une quantité intermédiaire de calculs auxiliaires pouvant être mémorisées temporairement.

Selon une autre particularité, au fil du traitement des échantillons en entrée du système par les différents sous-blocs, les valeurs des différents $\theta_i$ initialisées de façon arbitraire, convergent vers des valeurs rendant la démodulation effective.

Selon une autre particularité, le réseau de neurones spécialisé constitue une suite de blocs de type MIMO (« multi inputs, multi outputs »).

Selon une autre particularité, la méthode comprend en outre le stockage par au moins un tampon mémoire de la pluralité d'entrée et dans au moins un autre tampon de la pluralité de sorties de chaque neurone spécialisé du réseau.

Selon une autre particularité, l'acquisition par un échantillonnage est réalisée sur deux signaux d'entrée.

Selon une autre particularité, la méthode est appliquée dans un certain schéma mono-voie sur un autre équipement permettant de démoduler un signal mono-voie de modulation linéaire en compensant : l'amplification du signal, sa phase, son résidu de porteuse, les effets du canal de propagation.

Selon une autre particularité, à l'initialisation du système informatique constituant un démodulateur des paramètres $\theta_i$ sont fournis par défaut par une mémoire du système, dans les premiers instants de la mise en œuvre de la méthode, le système permettant la convergence des paramètres $\theta_i$ vers des valeurs pertinentes.

Selon une autre particularité, lorsque les distances entre les valeurs calculées et celles mémorisées p et définissant un voisinage sont inférieures à certains seuils pré mémorisés par le dispositif, les sorties du dispositif sont alors délivrées à un appareil d'utilisation.

Un autre but est de remédier à un ou plusieurs inconvénients de l'art antérieur concernant la mise en œuvre ou l'implémentation d'une méthode de démodulation en aveugle des signaux de télécommunication numérique, dans un matériel informatique. La méthode permet la séparation des composantes d'un signal bi-voies reçu après mélange.

Ce but est atteint par un produit programme d'ordinateur implémenté sur un support mémoire, susceptible d'être mis en œuvre au sein d'une unité de traitement informatique, soit par un hardware ou une combinaison hardware et firmware, et comprenant des instructions pour la mise en œuvre d'une méthode selon l'une quelconque des revendications précédentes.

Un autre but est de remédier à un ou plusieurs inconvénients de l'art antérieur concernant l'application d'une méthode de séparation et de démodulation en aveugle des signaux de télécommunication numérique en modulation linéaire, dans un réseau informatique.

Ce but est atteint par une utilisation d'un système de démodulation en aveugle d'un signal de télécommunication, le système comprenant au moins un réseau de neurones spécialisés chacun définissant respectivement un filtrage par un premier neurone spécialisé, un gain d'amplification par un second neurone spécialisé, la fréquence du signal de télécommunication numérique par un troisième neurone spécialisé et la valeur de phase du signal par un quatrième neurone spécialisé.

D'autres particularités et avantage de la présente invention sont détaillés dans la description qui suit.

DESCRIPTION DES FIGURES ILLUSTRATIVES

D'autres particularités et avantages de la présente invention apparaîtront plus clairement à la lecture de la description ci-après, faite en référence aux dessins annexés, dans lesquels :

- la figure 1 représente schématiquement l'intégration d'un « neurone spécialisé » ($F_i$) à un ensemble de neurones amont ($G_i$) et à un ensemble de neurones aval ($H_i$) d'une méthode temps réel de séparation et de démodulation aveugle de signaux de télécommunication numérique, selon un mode de réalisation de l'invention ;
- la figure 2 représente schématiquement les traitements réalisés par le neurone spécialisé nommé ($F_i$) du réseau, selon un mode de réalisation de l'invention ;
- la figure 3 représente schématiquement une chaine de traitement d'un démodulateur aveugle de type mono-voie, selon un mode de réalisation de l'invention ;
- les figures 4 et 5 représentent schématiquement une chaine de traitement d'un démodulateur aveugle de type multi-voies, respectivement, la génération et la transmission au bloc suivant d'une pluralité de sorties du bloc précédent et la rétropopagation des erreurs calculées.

Sur les différentes figures, les mêmes références peuvent désigner des éléments identiques ou similaires.

DESCRIPTION DES MODES DE REALISATION PREFERES DE L'INVENTION

Dans la suite, on notera que chaque neurone spécialisé du réseau correspond à un bloc logique de traitement et comprend au moins un sous-bloc ou sous-module fonctionnel (ou opérateur de calcul). Chacun des blocs des neurones comprend au moins une machine informatique et un logiciel ou code exécutable par la machine pour définir un ou plusieurs paramètre(s) obtenu(s) en calculant une ou plusieurs fonction(s) analytique(s) (qu'elles soient réelles, complexes, d'une ou de plusieurs dimensionsspécifique(s)

La présente invention concerne une méthode temps réel de démodulation aveugle de signaux de télécommunication numérique, à partir de l'observation par échantillonnage d'un signal, ce signal correspond à la réception d'un signal de modulation linéaire ayant subi des déformations lors de sa transmission, le processus de traitement comprenant les étapes suivantes :

- acquisition par échantillonnage de $m_0$ signaux ($x_{0,.0},\cdots,x_{0,m_0-1}$) pour constituer chacune une entrée d'un réseau de neurones spécialisés ; chaque neurone $F_i$ étant simulé par les sorties d'une chaine amont $G_i$ et stimulant une chaine aval $H_i$ ; chaque jeu d'échantillons parcourt la même chaine de traitement ;

- pour chaque nouvel échantillon en entrée, chaque sous neurone $F_i^{(N)}$ est stimulé par les sorties de la chaine amont $G_i^{(N)}$ constituée de la mise en cascade des neurones spécialisés $F_0^{(N)}$ à $F_{i-1}^{(N)}$ et stimulant la chaine aval $H_i^{(N)}$ constituée des neurones spécialisés $F_{i+1}^{(N)}$ à $F_{L-1}^{(N)}$ ; les traitements réalisés par le sous module $F_i^{(N)}$ dépendent d'un paramètre mémorisé en interne $\theta_i$ ; les sorties du dernier neurone $F_{L-1}^{(N)}$ constituent le sorties d'intérêt du système ou encore les signaux démodulés et sont notées $y_0\cdots y_N$ ;

- une fonction non linéaire ($NL$) est appliquée indépendamment à chaque signal démodulé $y_j$ pour produire les variables ($z_j$) et calculer les erreurs de bout de chaine $e_j = \overline{z_j - y_j}$ ;

- rétropropagation de l'erreur et mise à jour du paramètre $\theta_i$ ;

- un signal d'erreur traverse le réseau en sens inverse : du neurone $F_{L-1}$ au neurone $F_0$ ; l'erreur en entrée du neurone

$F_{L-1}$ est le vecteur $(e_{L-1,0}, \cdots, e_{L-1,N-1}) = (e_0, \cdots, e_{N-1})$ ; en traversant le neurone $j$, l'erreur est modifiée par le sous neurone $F_j^{(P)}$ avant d'être transmise au neurone $F_{j-1}$ ; parallèlement à la retroprogation de l'erreur du neurone $j$ au neurone $j$ - 1, l'erreur en provenance du neurone $j$ + 1 est mise en entrée du sous neurone $F_j^{(U)}$ qui produit un terme correctif $\delta\theta_j$ qui permet la mise à jour du paramètre interne $\theta_j$ selon $\theta_j += \delta\theta_j$.

Cette erreur calculée peut permettre de corriger la valeur courante de $\theta_i$ chaque bloc. Les sorties des derniers blocs du réseau correspondent idéalement aux symboles démodulés.

Ces signaux de télécommunication peuvent inclure des déformations comprenant notamment : un filtre de canal (et un filtre de co-canal dans le cas bi-voies), une amplification, une valeur de phase, un résidu de porteuse, du bruit et d'autres perturbations stochastiques comme du bruit de phase. Ainsi, selon l'invention, le réseau de démodulation va corriger ces différents effets à travers des neurones de traitement spécialisés. Par neurones de traitement spécialisés, on entend une ou plusieurs fonctions dont les paramètres peuvent être mise à jour par rétropropagation.

Dans certains modes de réalisation, les paramètres $\theta_i$ des différents blocs de traitement sont prédéfinis initialement, par exemple de façon arbitraire sans s'éloigner des valeurs attendues. Pour chaque échantillon entrant dans le système et pour chaque neurone i, notre système produit un terme correctif $\delta\theta_i$ qui est ajouté à la valeur courante du paramètre $\theta_i$ : $\theta_i += \delta\theta_i$. Cette équation de mise à jour produit une suite de valeurs de $\theta_i$ qui convergent vers la valeur de $\theta_i$ qui permet de démoduler au mieux le signal d'entrée.

Dans certains modes de réalisation, chaque neurone $F_i$ du réseau réalise spécifiquement :

- un traitement d'une fonction « next », implémentée et mise en œuvre dans le sous-bloc logique traitement $F_i^{(N)}$ pour générer des sorties à partir d'une pluralité d'observation et les transmettre au bloc de traitement du neurone suivant du réseau ; pour le neurone $F_i$, cette fonction s'écrit de façon générale avec ses entrées-sorties sous la forme $(X_{i+1,0}, \cdots, X_{i+1,m_{i+1}-1}) = \text{next}(X_{i,0}, \cdots, X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$. Chaque traitement est paramétré par un ensemble de paramètres $\theta_i$ d'où la notation $F_i^{(N)} = F_i^{(N)}(\cdot \mid \theta_i)$ quand on veut rappeler l'importance du paramétrage.

- un traitement d'une fonction « Propagate », implémentée et mise en œuvre dans le sous-bloc logique $F_i^{(P)}$ pour calculer les erreurs $(e_{i,0}, \cdots, e_{i,m_i-1})$ à partir des erreurs $(e_{i+1,0}, \cdots, e_{i+1,m_{i+1}-1})$ fournies par le bloc $F_{i+1}^{(P)}$ ou par $(e_{L-1,0}, \cdots, e_{L-1,N-1}) = (e_0, \cdots, e_{N-1})$ avec $e_j = \overline{z_j - y_j}$ en bout de chaine soit à l'entrée $F_{L-1}^{(P)}$. Cette fonction s'écrit pour le i-ème neurone : $(e_{i,0}, \cdots, e_{i,m_i-1}) = \text{propagate}(e_{i+,0}, \cdots, e_{i+1,m_{i+1}-1})$

- un traitement d'une fonction « Update», implémentée et mise en œuvre dans le sous-bloc logique $F_i^{(U)}$ pour calculer le terme correctif $\delta\theta_i$ à appliquer à la valeur courante du paramètre mémorisé en interne $\theta_i$ à partir des erreurs $(e_{i+1,0}, \cdots, e_{i+1,m_{i+1}-1})$ renvoyées par le sous bloc $F_{i+1}^{(P)}$. Cette fonction s'écrit de façon générale sous la forme $\delta\theta_i = \text{update}(e_{i+1,0}, \cdots, e_{i+1,m_{i+1}-1})$.

Par implémenté et mise en œuvre, on entend soit l'exécution d'un programme correspondant aux fonctions ou formules mathématiques (explicitées dans le texte), par un matériel informatique (tel qu'un microprocesseur et une mémoire) ; soit par un hardware ou une combinaison hardware et firmware.

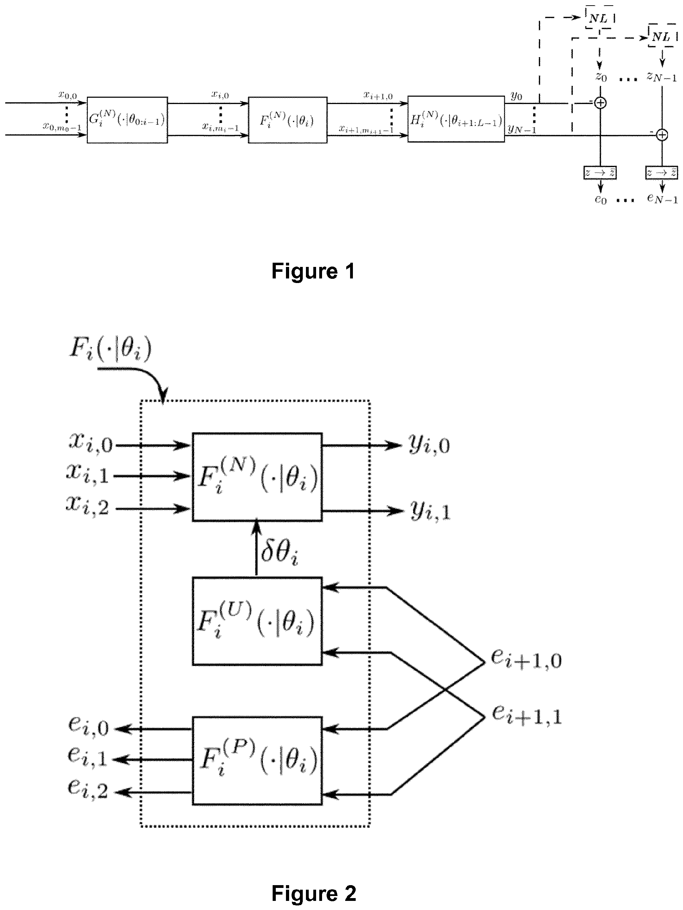

Ainsi, comme représenté par exemple sur la figure 2, chaque neurone $F_i$ encapsule au moins deux sous-neurones logiques qui implémentent chacun au moins une des deux fonctions « update » et « next » ci-après et la fonction « propagate » qui n'est pas nécessairement implémentée par le premier bloc (G$_i$) :

- $F_i^{(N)}$ implémente $(X_{i+1,0}, \cdots, X_{i+1,m_{i+1}-1}) = \text{next}(X_{i,0}, \cdots, X_{i,m_i-1})$

- $F_i^{(P)}$ implémente $(e_{i,0}, \cdots, e_{i,m_i-1}) = \text{propagate}(e_{i+1,0}, \cdots, e_{i+1,m_{i+1}-1})$

- $F_i^{(U)}$ implémente $\delta\theta_i = \mathrm{update}\left(e_{i+1,0}, \cdots, e_{i+1,m_{i+1}-1}\right)$

La figure 1, par exemple représente schématiquement l'intégration d'un « neurone spécialisé » $F_i$ à une chaine ou un ensemble de neurones amont ($G_i$) et à une chaine ou un ensemble de neurones aval ($H_i$) d'une méthode temps réel de démodulation aveugle de signaux de télécommunication numérique. Le neurone $F_i$ étant relié en entré au dernier des neurones de l'ensemble $G_i$, et en sortie au premier de l'ensemble $H_i$.

Dans certains modes de réalisation, un des blocs de traitement $F_i^{(N)}$ comprend au moins un programme implémentant et mettant en œuvre une suite de traitements élémentaires de la forme :

- $F_i^{(N)}$ réalise$\left(X_{i+1,0}, \cdots, X_{i+1,m_{i+1}-1}\right) = \mathrm{next}\left(X_{i,0}, \cdots, X_{i,m_i-1}\right), X_{ij} \in K^{q_{ij}}$ avec $q_{ij}$ un entier et $K$ l'espace des nombres réels ou l'espace des nombres complexes

- $F_i^{(p)}$ réalise$\left(e_{i,0}, \cdots, e_{i,m_i-1}\right) = \mathrm{propagate}\left(e_{i+1,0}, \cdots, e_{i+1,m_{i+1}-1}\right)$

- $F_i^{(U)}$ réalise $\delta\theta_i = \mathrm{update}\left(e_{i+1,0}, \cdots, e_{i+1,m_{i+1}-1}\right)$

Le traitement réalisé par le bloc $\left(F_i^{(N)}\right)$ dépend d'un paramètre $\theta_i$ qui peut être un nombre réél ou complexe, un vecteur lui-même réel ou complexe...

Dans certains modes de réalisation, la fonction « next » implémentée dans le sous-neurone ou sous bloc $F_i^{(N)}$ est connue analytiquement et dépend d'un paramètre $\theta_i$.

Elle pourra être notée $\left(X_{i+1,0}, \cdots, X_{i+1,m_{i+1}-1}\right) = F_i^{(N)}\left(X_{i,0}, \cdots, X_{i,m_i-1} \mid \theta_i\right)$ .

Les projections élémentaires du vecteur de sortie sur la composante $X_{i+1,j}$ pourra être notée $F_{i,j}^{(N)}$.

Dans certains modes de réalisation, comme représenté par exemple sur la figure 1, un réseau de neurones spécialisés (pouvant être agencé dans un démodulateur) pour démoduler en aveugle un signal de télécommunication en modulation linéaire, comprend dans chacun des neurones un bloc de traitement ( $G_i^{(N)}$, $F_i^{(N)}$, $H_i^{(N)}$ )Le premier bloc de traitement $\left(G_i^{(N)}\right)$ reçoit deux signaux correspondant chacun à une première pluralité d'observation du signal pour générer une pluralité de sorties qui sont transmis au bloc logique $\left(F_i^{(N)}\right)$ suivant. Le bloc logique $\left(F_i^{(N)}\right)$ intègre la pluralité de sorties pour générer à son tour une autre pluralité de sorties qui sont transmis au dernier bloc logique $\left(H_i^{(N)}\right)$ du réseau. Ce dernier bloc $\left(H_i^{(N)}\right)$ intègre à son tour la pluralité de sorties du précédent bloc logique $\left(F_i^{(N)}\right)$ pour générer également une pluralité de sorties. Un filtre de non linéarité est appliqué à la sortie du dernier bloc $\left(H_i^{(N)}\right)$, afin de calculer un signal d'erreur (e) pour pouvoir le rétropropager de cette erreur calculée sur chacune des entrées du réseau associée à l'entrée respective du réseau.

Dans certains modes de réalisation, l'ensemble des L blocs peut exécuter une chaine de traitements de la forme, implémentée et mise en œuvre par au moins un programme, suivante:

pour tout $0 \leq i < L$

$$(y, \cdots, y_{N-1}) = H_i^{(N)}\left(F_{i,0}^{(N)}\left(x_{i,0} \cdots x_{i,M_i-1} \mid \theta_0\right), \cdots, F_{i,N_i-1}^{(N)}\left(x_{i,0} \cdots x_{i,M_i-1} \mid \theta_{n_i-1}\right) \mid \theta_{i+1:L-1}\right)$$

avec

$$(x_{i,0}, \cdots, x_{i,m_i-1}) = G_i^\theta(x_{0,0}, \cdots, x_{0,m_0-1}|\theta_{0:i-1})$$

$$= \left(G_{i0}^\theta(x_{0,0}, \cdots, x_{0,m_0-1}|\theta_{0:i-1}), \cdots, G_{i,m_i-1}^\theta(x_{0,0}, \cdots, x_{0,m_0-1}\theta_{0:i-1})\right)$$

Un nombre de L blocs s'enchainent pour réaliser un traitement global. L'enchainement des blocs 0 à $i$ - 1 est noté $G_i^{(N)}(\cdots|\theta_{0:i-1})$ et l'enchainement des blocs $i$ + 1 à $L$ - 1 est noté $H_i^{(N)}(\cdots|\theta_{i+1:L-1})$. Les sorties du dernier bloc sont notées $y_0, \cdots, y_{N-1}$.

On note $F_{i,0}^{(N)}(x_{i,0} \cdots x_{i,m_i-1}|\theta_i), \cdots, F_{i,n_i-1}^{(N)}(x_{i,0} \cdots x_{i,m_i-1}|\theta_i)$ les $n_i$ fonctions de projections donnant $Y_{i,k} = F_{i,k}^{(N)}(x_{i,0} \cdots x_{i,m_i-1}|\theta_i)$ pour $0 \le k < n_i$.

Dans certains modes de réalisation, les variables dont dépendent chaque sortie de blocs peuvent être explicitées selon la notation suivante : $y_j = y_j^\theta(x_{0,0} \cdots x_{0,M_0-1})$. Chaque sortie de blocs peut être une valeur réelle ou complexe ou même vectorielle.

Dans certains modes de réalisation, l'ajout de la non-linéarité à la sortie du dernier bloc $(H_i^{(N)})$ du réseau est mise en œuvre par une fonction implémenté dans un programme qui s'écrit :
$z_j$ = NL($y_j$) dans laquelle

- $z_j$ est le signal sortant d'un organe de décision du dernier bloc
- $y_j$ est un échantillon démodulé

Dans certains modes de réalisation, la rétropropagation des erreurs calculées est obtenue par les traitements, implémentés et mise en œuvre par un algorithme de rétropagation de l'erreur, suivants :

- Initialisation de la rétropropagation sous la forme pour $0 \le k < N$, $e_{L,k} = \overline{z_k - y_k}$

- Propagation de l'erreur par le sous-neurone $F_i^{(P)}$ dans la fonction ($e_{i,0}, \cdots, e_{i,m_i-1}$) = propagate($e_{i+1,0}, \cdots, e_{i+1,m_{i+1}-1}$) selon les calculs

  ∘ $\forall 0 \le j < m_i, e_{i,j} = \sum_k e_{i+1,k} \cdot \frac{\partial F_{i,k}}{\partial x_{i,j}}$

Dans certains modes de réalisation, la mise à jour des paramètres internes $\theta_i$ de chaque neurone $F_i$ est obtenue dans le sous neurone $F_i^{(U)}$ par les traitements, implémentés et mise en œuvre dans la fonction $\delta\theta_i$ = update($e_{i+1,0}, \cdots, e_{i+1,m_{i+1}-1}$) selon :

  ∘ Calcul de $\Delta_i$ :
  - Pour $0 \le j < M_{i+1}, D_{i,j} = e_{i+1,j} \cdot \frac{\partial F_{i,j}^{(N)}}{\partial \theta_i}$
  - $\Delta_i = \sum_j D_{i,j}$

  ∘ Mise à jour de $\theta_i$ :
  - $\theta_i += 2\mu\Re(\Delta_i)$ si $\theta_i$ est dans un $R$ espace vectoriel
  - $\theta_i += 2\mu\Delta_i$ si $\theta_i$ est dans un $C$ espace vecoriel

Avec

- $\mu_i$ un paramètre réel appelé « vitesse d'apprentissage »

- $\delta\theta_i$ est le paramètre correctif du paramètre $\theta_i$
- $D_{ij}$ est une quantité intermédiaire de calculs auxiliaires pouvant être mémorisées temporairement.

Dans certains modes de réalisation, au fil du traitement des échantillons en entrée du système par les différents sous-neurones, les valeurs des différents $\theta_i$, pouvant être initialisées de façon arbitraire, convergent vers des valeurs rendant la démodulation effective.

Dans certains modes de réalisation, le réseau de neurones spécialisé constitue une suite de blocs MIMO (terme anglais pour « multi inputs, multi outputs »), chaque bloc (i) réalisant un traitement élémentaire paramétré par un ensemble $\theta_i$. Si tous les $\theta_i$ de la chaine sont bien réglés, la chaine procède à la démodulation effective du signal.

Dans certains mode de réalisation, les $\theta_i$ ne sont pas connus, et la chaine permet d'apprendre en ligne les valeurs pertinentes pour chaque $\theta_i$. A l'initialisation du système des $\theta_i$ sont fournis par défaut. Dans les premiers instants, le système permet la convergence des $\theta_i$ vers les valeurs pertinentes ; cette phase est appelée phase de convergence ; le signal démodulé produit en sortie n'est alors pas fiable. Quand le système atteint un voisinage des paramètres $\theta_i$, on entre en phase dite de production ou de suivi. Les sorties du démodulateur sont alors fiables et conjointement à la démodulation du signal, le système poursuit la variation des paramètres du système. Le système ne bascule pas explicitement d'un mode à l'autre, la seconde phase (ou phase de production) se place dans la continuité de la première.

Dans certains modes de réalisation, la méthode comprend en outre le stockage par au moins un tampon mémoire de la pluralité d'entrées et dans au moins un autre tampon de la pluralité de sorties de chaque neurone spécialisé du réseau. Les valeurs d'échantillon extraites de la pluralité d'entrée du signal peuvent être transmises dans un premier tampon, pouvant être associé au bloc de traitement correspondant de façon temporaire ou permanente selon l'application souhaitée, de sorte à mémoriser les états internes du signal d'entrée lors d'une phase d'initiation. Les valeurs de la pluralité de sorties peuvent être mémorisées dans un second tampon, pouvant être associé à un bloc de traitement correspondant de façon temporaire ou permanente selon l'application souhaitée, de sorte à mémoriser les états internes du signal de sortie.

Dans certains modes de réalisation, les tampons de mémoire sont du type FIFO (terme anglais « First-In-First-Out ») définissant une méthode pour organiser et manipuler un tampon de données, dans laquelle les premières données entrées sont traitées les premières). Dans la suite, un tampon mémoire FIFO peut être considéré comme un vecteur. Ainsi, dans certains modes de réalisation, les termes du vecteur peuvent aller du plus ancien (premier indice du vecteur) au plus récent (dernier indice du vecteur) élément du tampon FIFO.

Dans certains modes de réalisation, l'acquisition par un échantillonnage est réalisée sur deux signaux d'entrée.

Dans certains modes de réalisation, la méthode de la présente invention est appliquée dans un certain schéma mono-voie sur un autre équipement permettant de démoduler un signal mono-voie de modulation linéaire en compensant : l'amplification du signal, sa phase, son résidu de porteuse, les effets du canal de propagation.

Dans certains modes de réalisation, à l'initialisation du système informatique constituant un démodulateur des paramètres $\theta_i$ sont fournis par défaut par une mémoire du système, dans les premiers instants de la mise en œuvre de la méthode, le système permettant la convergence des paramètres $\theta_i$ vers des valeurs pertinentes.

Dans certains modes de réalisation, lorsque les distances entre les valeurs calculées et celles mémorisées p et définissant un voisinage sont inférieures à certains seuils pré mémorisés par le dispositif, les sorties du dispositif sont alors délivrées à un appareil d'utilisation.

Dans certains modes de réalisation, dans le cas de la démodulation aveugle d'un signal de télécommunication numérique en modulation linéaire, on identifie deux types de signaux :

- les signaux dits mono-voies : il s'agit d'un signal classique ou un flux d'information est transmis sur un support ;

- les signaux dits multi-voies ou XPIC (« cross-polarization interference canceller » ou annuleur d'interférences de polarisation croisée) : il s'agit de plusieurs signaux qui sont multiplexés sur les deux polarisations de l'onde électromagnétique.

Une représentation du signal mono-voie en bande base peut être de la forme :

$$x_b(t) = \sum_{k=-\infty}^{+\infty} s_k h(t - kT)$$

Avec $(s_k)$ une suite de nombre complexe inclus dans un sous-ensemble fini appelé constellation, $h$ un filtre de mise en forme, $T$ le temps symbole.

Lors de sa transmission, ce signal subit différentes altérations et il peut être reçu sous la forme :

$$x(t) = e^{2\pi jf_0 t}\left(Ae^{j\varphi}x_b(t - \delta t) + g * x_b(t)\right) + \eta(t)$$

Avec

- $f_0$ la fréquence de porteuse
- $A$ l'amplitude du trajet principale
- $\varphi$ la phase principale
- $\delta t$ le retard du trajet principal
- $g$ un filtre qui représente plusieurs phénomènes : canal de propagation engendré par des multi trajets, filtre perturbateur introduit par les imperfections des équipements électroniques
- $\eta$ un bruit complexe

Dans le cas du signal mono-voie, la démodulation consiste à retrouver la suite ($s_k$) à partir de l'observation d'une version échantillonnée de $x(t)$.

Une représentation de signal multi-voies, utilisant deux polarisations pour transmettre deux signaux, en bande base peut être de la forme :

$$x_b^H(t) = \sum_{k=-\infty}^{+\infty} s_k^H h(t - kT)$$

et

$$x_b^V(t) = \sum_{k=-\infty}^{+\infty} s_k^V h(t - kT)$$

Ces signaux sont transmis conjointement sur les polarisations H et V de l'onde électromagnétique. Les deux signaux sont reçus sous la forme :

$$x^H(t) = e^{2\pi jf_0 t}\left(A^H e^{j\varphi^H}x_b^H\left(t - \delta t^H\right) + g_{HH} * x_b^H(t) + + g_{VH} * x_b^V(t)\right) + \eta^H(t)$$

$$x^V(t) = e^{2\pi jf_0 t}\left(A^V e^{j\varphi^V}x_b^V\left(t - \delta t^V\right) + g_{VV} * x_b^V(t) + + g_{HV} * x_b^H(t)\right) + \eta^V(t)$$

Avec

- $f_0$ la fréquence de porteuse
- $A^H, A^V$ l'amplitude du trajet principale sur la voie $H$ et sur la voie $V$
- $\varphi^H, \varphi^V$ la phase principale sur la voie $H$ et sur la voie $V$
- $\delta t^H, \delta t^V$ le retard du trajet principal sur la voie $H$ et sur la voie $V$
- $g_{HH}$ un filtre qui représente le canal du signal $H$ sur la voie de réception $H$
- $g_{VH}$ un filtre qui représente le canal du signal $V$ sur la voie de réception $H$
- $g_{VV}$ un filtre qui représente le canal du signal $V$ sur la voie de réception $V$
- $g_{HV}$ un filtre qui représente le canal du signal $H$ sur la voie de réception $V$
- $\eta^H, \eta^V$ des bruits complexes sur chaque voies de réception.

Dans le cas du signal multi-voies, la démodulation consiste à retrouver les suites $\left(s_k^H\right)$ et $\left(s_k^V\right)$ à partir de l'observation d'une version échantillonnée du signal couple ($x^H(t), x^V(t)$).

L'égalisation du signal consiste à inverser au mieux les canaux de transmissions. On cherche donc à designer une fonction d'égalisation. Une telle fonction nécessite de nombreux paramètres (fréquence, amplitude, filtres d'égalisation...). Dans un mode de transmission « non aveugle », des séquences connues de l'émetteur et du récepteur sont émises régulièrement et permettent de régler l'égaliseur. Dans un contexte aveugle aucune séquence n'est connue et la fonction est difficile à trouver.

Dans certains modes de réalisation, la présente invention permet de trouver la fonction d'égalisation dans le contexte de la démodulation aveugle.

Dans certains modes de réalisation, la présente invention peut être appliquée aussi bien dans un contexte aveugle que non aveugle mais parait particulièrement intéressant dans le premier contexte. En effet, cette invention permet de régler une chaine de traitement paramétrable sans connaissance a priori. L'invention est en particulier pertinente quand plusieurs paramètres sont en jeu.

Dans un certains modes de réalisation, un signal mono-voie est défini comme un signal numérique modulé linéairement et transmis par transposition de fréquence sur une largeur de bande finie. Un signal bi-voies est défini comme un couple de signaux mono-voies multiplexés sur deux polarisations orthogonales.

La méthode appliquée dans un certain schéma permet notamment de démoduler un signal mono-voie de modulation linéaire en compensant : l'amplification du signal, sa phase, son résidu de porteuse, les effets du canal de propagation. La méthode appliquée selon un autre schéma de démoduler un signal bi-voies et de séparer ses deux composantes en compensant : l'amplification des signaux, leurs phases, les résidus de porteuses, les effets du canal de propagation et les effets du co-canal de propagation (fuite d'une polarisation sur l'autre et inversement lors de la propagation du signal).

Sans perte de généralité et pour simplifier les explications dans la suite on pourra, par exemple, considérer qu'un signal mono-voie est un cas particulier de signal bi-voies.

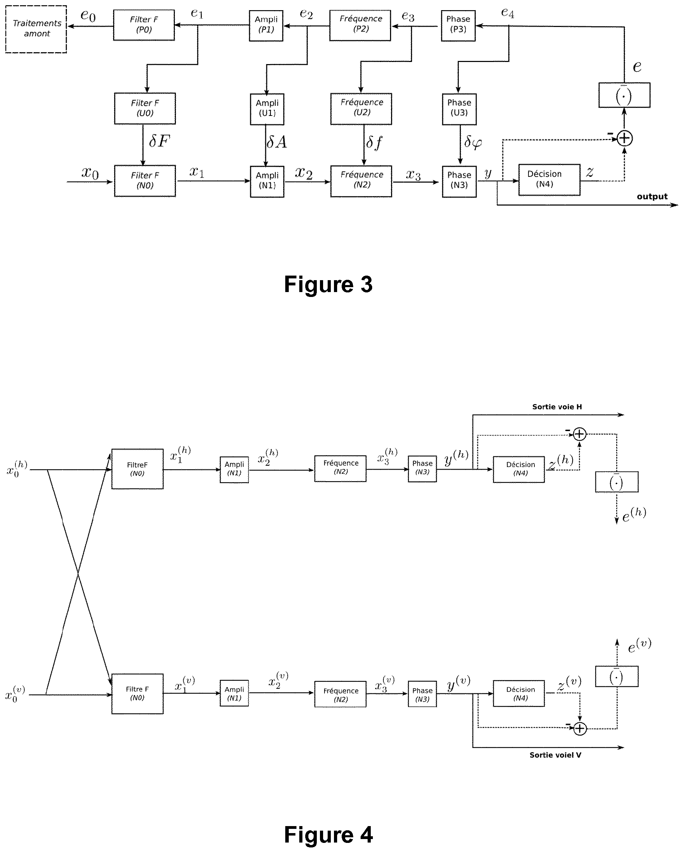

Dans certains modes de réalisation, comme par exemple représenté sur les figures 3 à 5, les principes de calcul de la méthode de la présente invention pour déterminer le ou les filtre(s), l'amplification, les fréquences du signal et les valeurs de phase du signal, peuvent être mis en œuvre dans un démodulateur aveugle d'un signal de type mono-voie et/ou d'un signal de type multi-voies .

Ainsi, la figure 3 représente un exemple de mise en œuvre de réseau de neurones spécialisés pour la démodulation aveugle d'un signal de type mono-voie. La figure 3 représente l'enchainement des blocs de traitements (N0 à N6) puis la rétropropagation de l'erreur (e) à travers les blocs (P5 à P0), pouvant représenter chacun une caractéristique du signal. Les erreurs permettent le calcul à la volée dans les blocs de la chaine (U5 à U0) des incréments des différents paramètres à appliquer aux blocs de traitement. Chacun des blocs U5 à U0 constituant des modules « updates ». Le bloc P0 comprend une sortie pouvant être associée à une éventuelle chaine en amont par exemple de synchronisation. Le filtre F peut permettre de compenser la déformation du signal dû à la propagation. Le démodulateur comprend plusieurs modules de traitements (Nx avec x = 0 à 4) chacun associé à un bloc « Update » (Ux avec x = 0 à 3) et un bloc « Propagate » (Px avec x = 0 à 3). Le bloc (N0) produit un filtrage du signal d'entrée (x) en mémorisant les dernières valeurs de ce dernier dans un tampon ou buffer interne de type FIFO. Sa sortie constitue l'entrée du bloc (N1) corrigeant l'amplification du signal pour que la puissance à sa sortie constitue l'entrée du bloc (N2) corrigeant la dérive de porteuse du signal. La sortie de (N2) constitue l'entrée de (N3) qui corrige la phase du signal. Le bloc ou module de traitement ou sous neurone logique (N3) est le dernier neurone spécialisé de la chaine. Sa sortie complexe (y) se voit appliquer la non linéarité (N4) qu'est la fonction de décision ou slicer associé à la modulation du signal. La sortie du bloc (N4) est z. L'erreur associée à l'échantillon traitée est $e_4 = \overline{z - y}$. Elle est injectée en parallèle dans le bloc « propagate » (P3) et dans le bloc « update » (U3). Le bloc (P3) permet de calculer l'erreur $e_3$ et le bloc (U3) permet de calculer l'incrément $\delta\varphi$ à appliquer à la valeur courante de la phase dans le module (N3). L'erreur $e_3$ traverse ensuite les blocs (P2) produisant l'erreur $e_2$ et le bloc (U2) qui permet de calculer l'incrément de fréquence $\delta f$ à appliquer à la valeur courante de la fréquence dans (N2). L'erreur $e_2$ traverse ensuite les blocs (P1) produisant l'erreur $e_1$ et le bloc (U1) qui permet de calculer l'incrément d'amplitude $\delta A$ à appliquer à la valeur courante de l'amplitude dans le bloc (N1). Enfin l'erreur $e_1$ traverse ensuite les blocs (P0) produisant l'erreur $e_0$ et le bloc (U0) qui permet de calculer l'incrément vectoriel $\delta F$ à appliquer à la valeur courante du filtre dans (N0). La valeur ($e_0$) n'est pas utilisée ici mais pourrait se rétropropager dans un réseau amont réalisant des tâches spécialisées comme par exemple la synchronisation du signal.

L'enchaînement des blocs de traitement, la rétropropagation de l'erreur calculée à travers les blocs « propagate » et l'incrément des différents paramètres des blocs de la chaîne via les blocs « update » peuvent être réalisés en cascade et en boucle jusqu'à avoir estimés le plus précisément possible les différents paramètres du signal.

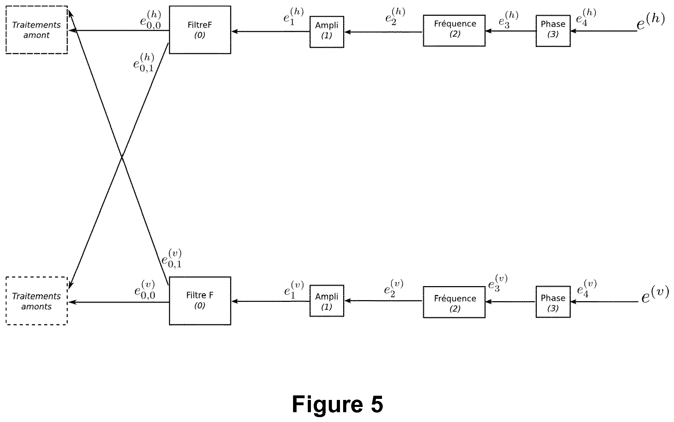

Les figures 4 et 5 représentent un exemple de mise en œuvre de réseau de neurones spécialisés pour lademodulation aveugle d'un signal de type multi-voies, appliquée dans démodulateur aveugle. La figure 4 illustre l'enchainement des blocs de traitement à partir de la réception des deux échantillons d'entrée $x_0^H$ et $x_0^V$, la figure 5 représente l'enchainement des blocs de propagation et de mise à jour à partir des erreurs $e^H$ et $e^V$ calculées en bout de chaine de traitement. Ainsi, deux blocs N0 reçoivent chacun un signal d'entrée pour générer les signaux de sortie $x_v$ et $x_h$.

Dans la figure 4, $x_0^H$ et $x_0^V$ sont deux échantillons en entrée du système. Le couple ( $x_0^H$, $x_0^V$ ) constitue l'entrée d'un premier bloc de filtrage (N0) et le couple retourné ( $x_0^V$, $x_0^H$ ) constitue l'entrée d'un autre bloc de filtrage (N0). En sortie de chacun de ces blocs (N0), on retrouve une chaine de traitement mono-voie dupliquée filtre excepté.

Les deux sorties égalisées sont $y^H$ et $y^V$ qui constituent les deux signaux démodulés. Les erreurs $e^H$ et $e^V$ sont formées de façon identique au cas monovoie.

Dans al figure 5, les erreurs $e^H$ et $e^V$ amorcent la chaine de rétrogradation. L'erreur se propage d'abord dans deux sous-chaines identiques à la chaine de retropropagation du cas monovoie. Pour une meilleure lisibilité, les blocs (x) représentent l'ensemble des blocs (Px avec x = 0 à 3) et (Ux avec x = 0 à 3) qui ont les mêmes entrées. La sortie du bloc (x) est la sortie du bloc (Px). En bout de chaine de retropropagation, chaque bloc de filtrage produit deux erreurs qui peuvent s'interfacer avec une éventuelle chaine amont comme par exemple une chaine de synchronisation.

Ces différentes étapes de cette méthode sont donc réalisées continuellement de façon automatique, pour pouvoir optimiser et autoréguler les calculs ou opérations effectués par les neurones (via au moins un algorithme adapté) de la chaine de traitement. Cette méthode de séparation et de démodulation en aveugle d'un signal de la présente invention, présente l'avantage d'estimer rapidement et en temps réel les différentes caractéristiques des signaux émis et de mettre en place une correction adapté pour chaque signal émis en la rétro-propageant dans la chaîne générique de traitement du signal. Par ailleurs, la méthode de la présent invention présente l'avantage de traiter de façon simple et efficace, les problèmes liés à l'interception de communication et de préférence pour la démodulation aveugle des signaux de télécommunication.

La présente invention concerne également un produit programme d'ordinateur implémenté sur un support mémoire, susceptible d'être mis en œuvre au sein d'une unité de traitement informatique par un matériel informatique (tel qu'un microprocesseur et une mémoire) ; soit par un hardware ou une combinaison hardware et firmware et comprenant des instructions pour la mise en œuvre d'une méthode selon l'une quelconque des modes de réalisation précédents.

Dans certains modes de réalisation, la présente invention propose une architecture de type réseau de neurones « spécialisés » pour traiter des problèmes d'interception de communications et plus particulièrement de démodulation aveugle de signaux télécommunication.

En effet, un signal d'entrée traverse une chaine de neurones spécialisés; chaque neurone réalise une fonction particulière paramétrée par un ensemble de valeurs. Les valeurs des réglages de chaque neurone spécialisé est a priori inconnu. Une non linéarité est appliquée au résultat en bout de chaine permettant de calculer une « erreur ». Il est alors possible de rétropropager cette erreur dans la chaine de traitement comme il est fait en apprentissage par réseau de neurones pour faire évoluer la valeur de chaque paramètre de chaque bloc vers une valeur plus pertinente.

La présence invention concerne en outre une utilisation dans un système de démodulation en aveugle d'un signal de télécommunication. Le système de démodulation ou de recherche en aveugle des caractéristiques du signal, comprend au moins un réseau de neurones spécifiques.

Dans certains modes de réalisation, un premier neurone spécialisé du réseau comprend au moins un filtre permettant d'acquérir le signal en aveugle et au moins un module d'amplification permettant d'amplifier les signaux pour évaluer par la suite les caractéristiques des signaux. Dans certains modes de réalisation, le module d'amplification peut être disposé dans un neurone différent du premier neurone. Un second neurone spécialisé comprend au moins un module de fréquence pour déterminer les fréquences des signaux émis en aveugle et/ou au moins un module de phase pour déterminer les valeurs de phase desdits signaux. Dans certains modes de réalisation, le module de phase peut être disposé dans un neurone différend du second neurone. Un troisième neurone spécialisé comprend un module de décision pour calculer un signal d'erreur et de rétropropager les erreurs calculées à chacun des blocs résiduels des neurones précédents. La méthode selon l'une quelconque des modes de réalisation précédents, est appliquée pour déterminer les caractéristiques du signal émis en aveugle (par exemple, l'amplitude, la fréquence et la valeur de phase des signaux).

Dans certains modes de réalisation, la méthode de démodulation aveugle peut être appliquée dans le cas de la démodulation d'un signal mono-voie (comme représenté par exemple sur la figure 3) et/ou d'un signal multi-voies (comme représenté par exemple sur les figures 4 et 5).

Dans certains modes de réalisation, pour un signal de type multi-voies, outre la démodulation de chaque voie, la méthode permet la séparation des différentes voies en aveugle.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

**Revendications**

1. Méthode temps réel de démodulation aveugle d'un signal de télécommunication numérique, à partir de l'observation d'une version échantillonnée de ce signal, la méthode étant **caractérisée en ce qu'**elle comprend les étapes suivantes :

   - acquisition par un échantillonnage d'une première pluralité d'échantillons du signal pour constituer chacune une entrée d'un réseau de L blocs de traitement ($G_i$, $F_i$, $H_i$) aussi appelés ici « neurones spécialisés », chaque neurone étant stimulé par les sorties du bloc précédent, la première pluralité d'échantillons du signal étant soumise en entrée au premier bloc stimulant un premier neurone du réseau pour générer une pluralité de sorties du premier bloc; chaque neurone $F_i$ étant stimulé par les sorties d'une chaine amont $G_i$ et stimulant une chaine aval $H_i$ ; chaque jeu d'échantillons parcourt la même chaine de traitement ;
   - les sorties des derniers blocs du réseau correspondent idéalement aux symboles démodulés ;
   - ajout d'une non linéarité à chacune des sorties du dernier bloc du réseau permettant de calculer un signal d'erreur et propagation de cette erreur dans le sens inverse de la chaine de traitement ;
   - estimation à réception par chaque neurone (i) de l'erreur d'un terme correctif $\delta\theta_i$ et mise à jour dans chaque bloc de la valeur du paramètre $\theta_i$ selon $\theta_i += \delta\theta_i$.

   et **caractérisée en ce que** chaque neurone ($F_i$) du réseau réalise spécifiquement :

   - un traitement d'une fonction « Next », implémentée et mise en œuvre dans un sous bloc logique de traitement $\left(F_i^{(N)}\right)$, pour générer des sorties à partir d'une pluralité d'observation du signal de télécommunication numérique reçue et les transmettre au bloc de traitement du neurone suivant du réseau ; cette fonction s'écrit de façon générale sous la forme $(X_{i+1,0},\cdots,X_{i+1,m_{i+1}-1}) = \text{next}(X_{i,0}, \cdots,X_{i,m_i-1})$ avec $m_i$ le nombre d'entrées et $m_{i+1}$ le nombre de sortie de $F_i^{(N)}$ qui correspond au nombre d'entrées de $F_{i+1}^{(N)}$ ;
   - un traitement d'une fonction « Propagate », implémentée et mise en œuvre dans un sous bloc logique « Propagate » $\left(F_i^{(P)}\right)$ pour calculer des erreurs $(e_{i+1,0},\cdots,e_{i+1,m_{i+1}-1})$ fournies par le bloc $F_{i+1}^{(P)}$ ou par $(e_{L-1,0},\cdots,e_{L-1,N-1}) = (e_0,\cdots,e_{N-1})$ avec $e_j = \overline{z_i - y_j}$ en bout de chaine soit à l'entrée $F_{L-1}^{(P)}$, pour le i-ème neurone, cette fonction s'écrit de façon générale sous la forme $(e_{i,0},\cdots,e_{i,m_i-1}) = \text{propagate}(e_{i+1,0},\cdots, e_{i+1,m_{i+1}-1})$
   - un traitement d'une fonction « Update », implémentée et mise en œuvre dans un sous bloc logique « Update » $\left(F_i^{(U)}\right)$, pour calculer des paramètres correctifs $\delta\theta_i$ à appliquer à la valeur courante du paramètre mémorisé en interne $\theta_i$ à partir des erreurs $(e_{i+1,0},\cdots,e_{i+1,m_{i+1}-1})$ renvoyées par le sous bloc $F_{i+1}^{(P)}$, cette fonction s'écrit de façon générale sous la forme $\delta\theta_i = \text{update}(e_{i+1,0},\cdots,e_{i+1,m_{i+1}-1})$.

2. Méthode selon la revendication 1, **caractérisée en ce que** chaque neurone ($F_i$) comprend au moins une implémentation et une mise en œuvre d'une suite de traitements élémentaires de la forme :

   - le sous bloc $F_i^{(N)}$ réalise $\left(X_{i+1,0},\cdots,X_{i+1,m_{i+1}-1}\right) = \text{next}\left(X_{i,0},\cdots,X_{i,m_i-1}\right), X_{ij} \in K^{q_{ij}}$ avec $q_{ij}$ un entier et $K$ un espace des nombres réels ou un espace des nombres complexes
   - le SOUS bloc $F_i^{(p)}$ réalise $\left(e_{i,0},\cdots,e_{i,m_i-1}\right) = \text{propagate}\left(e_{i+1,0},\cdots,e_{i+1,m_{i+1}-1}\right)$
   - le SOUS bloc $F_i^{(U)}$ réalise $\delta\theta_i = \text{update}\left(e_{i+1,0},\cdots,e_{i+1,m_{i+1}-1}\right)$

3. Méthode selon la revendication 1 ou 2, **caractérisée en ce que** l'ajout de la non-linéarité à la sortie du dernier bloc

$\left(H_i^{(N)}\right)$ du réseau est mise en œuvre par la fonction : non-linéaire, NL :

$z_j = NL(y_j)$ dans laquelle

- $z_j$ est un signal sortant d'un organe de décision du dernier bloc
- $y_j$ est un échantillon égalisé ou démodulé
- le bloc de décision étant défini par la comparaison du résultat obtenu par la sortie y du bloc phase avec une constellation finie de résultats possibles mémorisés par le bloc de décision, et décidant de prendre parmi les résultats possibles, celui dont la distance avec le point représentatif de la sortie y est la plus petite

4. Méthode selon la revendication 1 à 3, **caractérisée en ce que** la rétropropagation des erreurs calculées est obtenue par les traitements, implémentés et mise en œuvre par un algorithme de rétropropagation des erreurs, suivants :

   - Initialisation de la rétropropagation sous la forme pour $0 \leq k < N, e_{L,k} = \overline{z_k - y_k}$

   - Propagation des erreurs par le sous-neurone $F_i^{(P)}$ dans la fonction $(e_{i,0}, \cdots, e_{i,m_i-1}) = propagate(e_{i+1,0}\cdots, e_{i+1,m_{i+1}-1})$ selon les calculs

   $$\forall 0 \leq j < m_i, e_{i,j} = \sum_k e_{i+1,k} \cdot \frac{\partial F_{i,k}}{\partial x_{i,j}}$$

   ∘

5. Méthode selon la revendication 4, **caractérisée en ce que** la mise à jour des paramètres internes $\theta_i$ de chaque neurone $F_i$ est obtenue dans le sous neurone $F_i^{(U)}$ par les traitements, implémentés et mise en œuvre dans la fonction $\delta\theta_i = update(e_{i+1,0},\cdots,e_{i+1,m_{i+1}-1})$ selon :

   ∘ Calcul de $\Delta_i$ :
   - Pour $0 \leq j < M_{i+1}, D_{i,j} = e_{i+1,j} \cdot \frac{\partial F_{i,j}^{(N)}}{\partial \theta_i}$
   - $\Delta_i = \sum_j D_{i,j}$

   ∘ Mise à jour de $\theta_i$ :
   - $\theta_i += 2\mu\Re(\Delta_i)$ si $\theta_i$ est dansun **R** espace vectoriel
   - $\theta_i += 2\mu\Delta_i$ si $\theta_i$ est dans un **C** espace vecoriel

   Avec - $\mu_i$ un paramètre réel appelé « vitesse d'apprentissage »

   - $\delta\theta_i$ est un paramètre correctif du paramètre $\theta_i$
   - $D_{ij}$ est une quantité intermédiaire de calculs auxiliaires pouvant être mémorisées temporairement.

6. Méthode selon l'une quelconque des revendications 1 à 5, **caractérisée en ce qu'**au fil du traitement des échantillons en entrée du système par les différents sous-blocs, les valeurs des différents $\theta_i$ initialisées de façon arbitraire, convergent vers des valeurs rendant la démodulation effective.

7. Méthode selon l'une quelconque des revendications 1 à 6, **caractérisée en ce que** le réseau de neurones spécialisé constitue une suite de blocs de type MIMO, multi inputs, multi outputs.

8. Méthode selon l'une des revendications 1 à 7, **caractérisée en ce qu'**elle comprend en outre le stockage par au moins un tampon mémoire de la pluralité d'entrée et dans au moins un autre tampon de la pluralité de sorties de chaque neurone spécialisé du réseau.

9. Méthode selon l'une des revendications 1 à 8, **caractérisée en ce que** l'acquisition par un échantillonnage est réalisée sur deux signaux d'entrée.

**10.** Méthode selon une des revendications 1 à 9, **caractérisée en ce qu'**elle est appliquée dans un certain schémas mono-voiesur un autre équipement permettant de démoduler un signal mono-voie de modulation linéaire en compensant : l'amplification du signal, sa phase, son résidu de porteuse, les effets du canal de propagation.

**11.** Méthode selon une des revendications 1 à 9, **caractérisée en ce qu'**à l'initialisation du système informatique constituant un démodulateur des paramètres $\theta_i$ sont fournis par défaut par une mémoire du système, dans les premiers instants de la mise en œuvre de la méthode, le système permettant la convergence des paramètres $\theta_i$ vers des valeurs pertinentes.

**12.** Méthode selon une des revendications 1 à 9, **caractérisée en ce que**, lorsque les distances entre les valeurs calculées et celles mémorisées p et définissant un voisinage sont inférieures à certains seuils pré mémorisés par le dispositif, les sorties du dispositif sont alors délivrées à un appareil d'utilisation.

**13.** Produit programme d'ordinateur implémenté sur un support mémoire, mis en œuvre au sein d'une unité de traitement informatique, soit par un hardware ou une combinaison hardware et firmware, et comprenant des instructions pour la mise en œuvre d'une méthode selon l'une quelconque des revendications précédentes.

**14.** Utilisation d'un système de démodulation en aveugle d'un signal de télécommunication, le système comprenant au moins un réseau de neurones spécialisés chacun définissant respectivement un filtrage par un premier neurone spécialisé, un gain d'amplification par un second neurone spécialisé, la fréquence du signal de télécommunication numérique par un troisième neurone spécialisé et la valeur de phase du signal par un quatrième neurone spécialisé ; pour la mise en œuvre d'une méthode selon l'une quelconque des revendications 1 à 12.

**Patentansprüche**

**1.** Echtzeit-Verfahren zur blinden Demodulation eines digitalen Telekommunikationssignals aus der Beobachtung einer abgetasteten Version dieses Signals, wobei das Verfahren **dadurch gekennzeichnet ist, dass** es die folgenden Schritte umfasst:

- Beziehen einer ersten Vielzahl von Abtastwerten des Signals durch ein Abtasten zum Bilden von jeweils einem Eingang eines Netzwerks von L Verarbeitungsblöcken ($G_i$, $F_i$, $H_i$), die hier auch "spezialisierte Neuronen" genannt werden, wobei jedes Neuron durch die Ausgänge des vorhergehenden Blocks stimuliert wird, wobei die erste Vielzahl von Abtastwerten des Signals am Eingang zu dem ersten stimulierenden Block einem ersten Neuron des Netzwerks zum Erzeugen einer Vielzahl von Ausgängen des ersten Blocks ausgesetzt wird; wobei jedes Neuron $F_i$ durch die Ausgänge einer vorderen Kette $G_i$ stimuliert wird und eine hintere Kette $H_i$ stimuliert; wobei jeder Satz von Abtastwerten dieselbe Verarbeitungskette durchläuft;
- die Ausgänge von letzten Blöcken des Netzwerks idealerweise den demodulierten Symbolen entsprechen;
- Hinzufügen einer Nichtlinearität zu jedem der Ausgänge des letzten Blocks des Netzwerks, was ermöglicht, ein Fehlersignal und eine Ausbreitung dieses Fehlers in der entgegengesetzten Richtung der Verarbeitungskette zu berechnen;
- Schätzen des Fehlers eines Korrekturterms $\delta\theta_i$ bei Empfang jedes Neurons (i) und Aktualisieren des Werts des Parameters $\theta_i$ in jedem Block gemäß $\theta_i += \delta\theta_i$,

und dass jedes Neuron ($F_i$) des Netzwerks spezifisch umsetzt:

- eine Verarbeitung einer Funktion "Next", die in einem logischen Verarbeitungsunterblock $\left(F_i^{(N)}\right)$ implementiert und durchgeführt wird, zum Erzeugen von Ausgängen aus einer Vielzahl von Beobachtungen des empfangenen digitalen Telekommunikationssignals und Übertragen dieser an den Verarbeitungsblock des folgenden Neurons des Netzwerks; wobei diese Funktion auf allgemeine Weise in der Form $(X_{i+1,0},...X_{i+1,m_{i+1}-1}) = next(X_{i,0},...,X_{i,m_i-1})$ geschrieben wird, wobei $m_i$ die Anzahl von Eingängen ist und $m_{i+1}$ die Anzahl von Ausgängen von $F_i^{(N)}$ ist, die der Anzahl von Eingängen von $F_{i+1}^{(N)}$ entspricht;

- eine Verarbeitung einer Funktion "Propagate", die in einem logischen Unterblock "Propagate" $\left(F_i^{(P)}\right)$ implementiert und durchgeführt wird, zum Berechnen von Fehlern ($e_{i+1,0},..,e_{i+1,m_{i+1}-1}$), die durch den Block $F_{i+1}^{(P)}$

oder $(e_{L-1,0},...,e_{L-1,N-1})=(e_0,...,e_{N-1})$ bereitgestellt werden, wobei $e_j=\overline{z_j-y_j}$ am Kettenende, nämlich am Eingang $F_{L-1}^{(P)}$ ; wobei diese Funktion für das i-te Neuron auf allgemeine Weise in der Form $(e_{i,0},...e_{i,m_{i-1}})$ =propagate$(e_{i+1,0},\cdots,e_{i+1,m_{i+1}-1})$ geschrieben wird;

- eine Verarbeitung einer Funktion "Update", die in einem logischen Unterblock "Update" $\left(F_i^{(U)}\right)$ implementiert und durchgeführt wird, zum Berechnen von Korrekturparametern $\delta\theta_i$, die auf den aktuellen Wert des intern gespeicherten Parameters $\theta_i$ angewendet werden sollen, aus Fehlern $(e_{i+1,0},...,e_{i+1,m_{i+1}-1})$, die durch den Unterblock $F_{i+1}^{(P)}$ zurückgesendet werden; wobei diese Funktion auf allgemeine Weise in der Form $\delta\theta_i$ = update$(e_{i+1,0},...,e_{i+1,m_{i+1}-1})$ geschrieben wird.

2. Verfahren nach Anspruch 1, **dadurch gekennzeichnet, dass** jedes Neuron ($F_i$) mindestens eine Implementation und eine Durchführung einer Abfolge von grundlegenden Verarbeitungen der folgenden Form umfasst:

- der Unterblock $F_i^{(N)}$ setzt $(X_{i+1,0},...,X_i+_{1,m_{i-1}})$ = next$(X_{i,0},...,X_{i,m_{i-1}}),X_{ij} \in K^{q_{ij}}$ um, wobei $q_{ij}$ eine ganze Zahl ist und $K$ ein Raum von reellen Zahlen oder ein Raum von komplexen Zahlen ist,

- der Unterblock $F_i^{(P)}$ setzt $(e_{i,0},...,e_{i,m_{i-1}})$=propagate$(e_{i+1,0},...,e_{i+1,m_{i+1},-1})$ um,

- der Unterblock $F_i^{(U)}$ setzt $\delta\theta_i$ = update$(e_{i+1,0},...,e_{i+1,m_{i+1}-1})$ um.

3. Verfahren nach Anspruch 1 oder 2, **dadurch gekennzeichnet, dass** das Hinzufügen der Nichtlinearität zu dem Ausgang des letzten Blocks $\left(H_i^{(N)}\right)$ des Netzwerks durch die nichtlineare, NL, Funktion durchgeführt wird: $z_j=NL(y_j)$, in der

- $z_j$ ein Signal ist, das aus einem Entscheidungsglied des letzten Blocks austritt,
- $y_j$ ein entzerrter oder demodulierter Abtastwert ist,
- der Entscheidungsblock durch den Vergleich des erhaltenen Ergebnisses durch den Ausgang y des Phasenblocks mit einer Endkonstellation von gespeicherten möglichen Ergebnissen durch den Entscheidungsblock definiert wird, und entscheidet aus den möglichen Ergebnissen das zu nehmen, dessen Abstand zu dem repräsentativen Punkt des Ausgangs y der kleinste ist.

4. Verfahren nach den Ansprüchen 1 bis 3, **dadurch gekennzeichnet, dass** die Rückausbreitung von berechneten Fehlern durch die folgenden Verarbeitungen erhalten wird, die durch einen Algorithmus der Rückausbreitung von Fehlern implementiert und durchgeführt werden:

- Initialisierung der Rückausbreitung in der Form für $0 \leq k < N, e_{L,k} = \overline{z_k - y_k}$,
- Ausbreitung von Fehlern durch das Unterneuron $F_i^{(P)}$ in der Funktion $(e_{i,0},...e_{i,m_{i-1}})$ =propaga-

$$\forall 0 \leq j < m_i, e_{i,j} = \sum_k e_{i+1,k} \cdot \frac{\partial F_{i,k}}{\partial x_{i,j}} .$$

te$(e_{i+1,0},...,e_{i+1,m_{i+1}-1})$ gemäß den Berechnungen ∘.

5. Verfahren nach Anspruch 4, **dadurch gekennzeichnet, dass** die Aktualisierung von internen Parametern $\theta_i$ jedes Neurons $F_i$ in dem Unterneuron $F_i^{(U)}$ durch die Verarbeitungen, die in der Funktion $\delta\theta_i$ =update$(e_{i+1,0},...,e_{i+1,m_{i+1}-1})$ implementiert und durchgeführt werden, erhalten wird gemäß:

∘ Berechnung von $\Delta_i$:

$$0 \le j < M_{i+1}, D_{i,j} = e_{i+1,j} \cdot \frac{\partial F_{i,j}^{(N)}}{\partial \theta_i}$$

- für
- $\Delta_i = \sum_j D_{i,j}$

  ∘ Aktualisierung von $\theta_i$:

-

$$\theta_i + \; = \; 2\mu K(\Delta_i),$$

    wenn $\theta_i$ in einem Vektorraum **R** ist,
- $\theta_i + = 2\mu\Delta_i$, wenn $\theta_i$ in einem Vektorraum **C** ist,

  wobei - $\mu_i$ ein reeller Parameter ist, der Lerngeschwindigkeit genannt wird,

    - $\delta\theta_i$ ein Korrekturparameter des Parameters $\theta_i$ ist,
    - $D_{ij}$ eine Zwischenmenge von Zusatzberechnungen ist, die vorübergehend gespeichert werden können.

6. Verfahren nach einem der Ansprüche 1 bis 5, **dadurch gekennzeichnet, dass** im Laufe der Verarbeitung von Abtastwerten am Eingang des Systems durch die unterschiedlichen Unterblöcke die Werte von unterschiedlichen, auf zufällige Weise initialisierten $\theta_i$ mit Werten, die die Demodulation wirksam machen, konvergieren.

7. Verfahren nach einem der Ansprüche 1 bis 6, **dadurch gekennzeichnet, dass** das Netzwerk von spezialisierten Neuronen eine Abfolge von Blöcken vom MIMO-Typ (multipleinput, multiple-output) bildet.

8. Verfahren nach einem der Ansprüche 1 bis 7, **dadurch gekennzeichnet, dass** es außerdem das Speichern der Vielzahl von Eingängen durch mindestens einen Zwischenspeicher und der Vielzahl von Ausgängen jedes spezialisierten Neurons des Netzwerks in einem anderen Zwischenspeicher umfasst.

9. Verfahren nach einem der Ansprüche 1 bis 8, **dadurch gekennzeichnet, dass** das Beziehen durch ein Abtasten an zwei Eingangssignalen umgesetzt wird.

10. Verfahren nach einem der Ansprüche 1 bis 9, **dadurch gekennzeichnet, dass** es in einem bestimmten Einkanal-Schema an einer anderen Anlage angewendet wird, was ermöglicht, ein Einkanal-Signal zur linearen Modulation zu demodulieren, indem Folgendes ausgeglichen wird: die Verstärkung des Signals, seine Phase, sein Trägerrest, die Auswirkungen des Ausbreitungskanals.

11. Verfahren nach einem der Ansprüche 1 bis 9, **dadurch gekennzeichnet, dass** die Initialisierung der Parameter $\theta_i$ durch das Datensystem, das aus einem Demodulator besteht, standardmäßig durch einen Speicher des Systems in den ersten Momenten der Durchführung des Verfahrens bereitgestellt wird, wobei das System die Konvergenz der Parameter $\theta_i$ mit den zutreffenden Werten ermöglicht.

12. Verfahren nach einem der Ansprüche 1 bis 9, **dadurch gekennzeichnet, dass**, wenn die Abstände zwischen den berechneten Werten und den gespeicherten p, die eine Nachbarschaft definieren, kleiner als bestimmte von der Vorrichtung vorher gespeicherte Schwellenwerte sind, die Ausgänge der Vorrichtung dann an ein Verwendungsgerät geliefert werden.

13. Computerprogrammprodukt, das an einem Speichermedium implementiert wird, das in einer Datenverarbeitungseinheit durchgeführt wird, entweder durch eine Hardware oder eine Kombination von Hardware und Firmware, und Anweisungen zur Durchführung eines Verfahrens nach einem der vorhergehenden Ansprüche umfasst.

14. Verwendung eines Systems zur blinden Demodulation eines Telekommunikationssystems, wobei das System mindestens ein Netzwerk von spezialisierten Neuronen umfasst, die jeweils eine Filterung durch ein erstes spezialisiertes Neuron, ein Verstärkungsmaß für ein zweites spezialisiertes Neuron, die Frequenz des digitalen Telekommunikationssignals durch ein drittes spezialisiertes Neuron bzw. den Wert der Phase des Signals durch ein viertes spezialisiertes Neuron definieren; zur Durchführung eines Verfahrens nach einem der Ansprüche 1 bis 12.

## Claims

1. Real-time method of blind demodulation of a digital telecommunication signal, based on the observation of a sampled version of this signal, the method being **characterised in that** it comprises the following steps:

   - acquisition by sampling of a first plurality of samples of the signal in order to each form an input of a network of L processing blocks ($G_i$, $F_i$, $H_i$) also here called "specialised neurons", each neuron being stimulated by the outputs of the preceding block, the first plurality of samples of the signal being subject at the input to the first block stimulating a first neuron of the network in order to generate a plurality of outputs of the first block; each neuron $F_i$ being stimulated by the outputs of an upstream chain $G_i$ and stimulating a downstream chain $H_i$; each set of samples passes through the same processing chain;
   - the outputs of the last blocks of the network ideally correspond to the demodulated symbols;
   - addition of non-linearity to each of the outputs of the last block of the network making it possible to calculate an error signal and propagation of this error in the opposite direction to the processing chain;
   - estimation on reception by each neuron (i) of the error of a corrective term $\delta\theta_i$ and update in each block of the value of the parameter $\theta_i$ according to $\theta_i \mathrel{+}= \delta\theta_i$

   and **characterised in that**
   each neuron ($F_i$) of the network carries out specifically:

   - processing of a "Next" function, implemented and executed in a logic processing subblock ($F_i^{(N)}$), in order to generate outputs on the basis of a plurality of observations of the digital telecommunication signal received and transmit them to the processing block of the following neuron of the network; this function is generally written in the form $(X_{i+1,0}, ..., X_{i+1,m_{i+1}-1}) = \text{next}(X_{i,0}, ..., X_{i,m_i-1})$, where $m_i$ is the number of inputs and $m_{i+1}$ is the number of outputs of $F_i^{(N)}$ which corresponds to the number of inputs of $F_{i+1}^{(N)}$;
   - processing of a "Propagate" function, implemented and executed in a "Propagate" logic subblock ($F_i^{(P)}$) in order to calculate errors $(e_{i+1,0}, ..., e_{i+1,m_{i+1}-1})$ provided by the block $F_{i+1}^{(P)}$ or by $(e_{L-1,0}, ..., e_{L-1,N-1}) = (e_0, ..., e_{N-1})$, where $e_j = \overline{z_j - y_j}$ at the end of the chain, that is, at the input $F_{L-1}^{(P)}$, for the ith neuron, this function is generally written in the form $(e_{i,0}, ..., e_{i,m_i-1}) = \text{propagate}(e_{i+1,0}, ..., e_{i+1, m_{i+1}-1})$
   - processing of an "Update" function, implemented and executed in an "Update" logic subblock ($F_i^{(U)}$), in order to calculate corrective parameters $\delta\theta_i$ to be applied to the current value of the internally stored parameter $\theta_i$ on the basis of the errors $(e_{i+1,0}, ..., e_{i+1,m_{i+1}-1})$ sent by the subblock $F_{i+1}^{(P)}$; this function is generally written in the form $\delta\theta_i = \text{update}(e_{i+1,0}, ..., e_{i+1,m_{i+1}-1})$.

2. Method according to claim 1, **characterised in that** each neuron ($F_i$) comprises at least one implementation and one execution of a sequence of elementary processing of the form:

   - the subblock $F_i^{(N)}$ carries out $(X_{i+1,0}, ..., X_{i+1,m_{i+1}-1}) = \text{next}(X_{i,0}, ..., X_{i,m_i-1})$, $X_{ij} \in K^{q_{ij}}$ where $q_{ij}$ is an integer and $K$ is a space of real numbers or a space of complex numbers
   - the subblock $F_i^{(p)}$ carries out $(e_{i,0}, ..., e_{i,m_i}-1) = \text{propagate}(e_{i+1,0}, ..., e_{i+1,m_{i+1}}-1)$
   - the subblock $F_i^{(U)}$ carries out $\delta\theta_i = \text{update}(e_{i+1,0}, ..., e_{i+1,m_{i+1}}-1)$.

3. Method according to claim 1 or 2, **characterised in that** the addition of non-linearity to the output of the last block ($H_i^{(N)}$) of the network is executed by the function:
   non-linear, NL:
   $z_j = \text{NL}(y_j)$ in which

- $z_j$ is a signal from a decision-making organ of the last block
- $y_j$ is an equalised or demodulated sample
- the decision-making block being defined by comparison of the result obtained by the output y of the phase block with a finite constellation of possible results stored by the decision-making block, and deciding to take from among the possible results the one of which the distance from the representative point of the output y is the smallest.

4. Method according to claim 1 to 3, **characterised in that** backpropagation of the calculated errors is obtained by the following processing, implemented and executed by an error backpropagation algorithm:

- initialisation of backpropagation in the form
for $0 \leq k < N,\ e_{L,k} = \overline{z_k - y_k}$
- propagation of errors by the subneuron $F_i^{(P)}$ in the function $(e_{i,0}, ..., e_{i+1,m_i+1}\text{-}1) = \text{propagate}\ (e_{i+1,0}, ..., e_{i+1,m_{i+1}}\text{-}1)$ according to the calculations

$$e_{i,j} = \sum_k e_{i+1,k} \cdot \frac{\partial F_{i,k}}{\partial x_{i,j}}$$

  ∘ $\forall 0 \leq j < m_i,$

5. Method according to claim 4, **characterised in that** update of the internal parameters $\theta_i$ of each neuron $F_i$ is obtained in the subneuron $F_i^{(U)}$ by the processing, implemented and executed in the function $\delta\theta_i = \text{update}\ (e_{i+1,0}, ..., e_{i+1,m_{i+1}}\text{-}1)$ according to:

  ∘ Calculation of $\Delta_i$:

$$D_{i,j} = e_{i+1,j} \cdot \frac{\partial F_{i,j}^{(N)}}{\partial \theta_i}$$

    ■ For $0 \leq j < M_{i+1}$,
    ■ $\Delta_i = \sum_j D_{i,j}$

  ∘ Update of $\theta_i$:

    ■ $\theta_i \mathrel{+}= 2\mu\delta\Re\ (\Delta_i)$  if $\theta_i$ is in a **R** vectorial space
    ■ $\theta_i \mathrel{+}= 2\mu\Delta_i$ if $\theta_i$ is in a **C** vectorial space

where

- $\mu_i$ is a real parameter called the "learning speed"
- $\delta\theta_i$ is a corrective parameter for the parameter $\theta_i$
- $D_{ij}$ is an intermediate quantity of auxiliary calculations capable of being stored temporarily.

6. Method according to any one of claims 1 to 5, **characterised in that**, in the course of processing of the samples at the input of the system by the different subblocks, the arbitrarily initialised values of the different $\theta_i$ converge towards values which render demodulation effective.

7. Method according to any one of claims 1 to 6, **characterised in that** the network of specialised neurons constitutes a sequence of blocks of the MIMO type (multiple-input, multiple-output).

8. Method according to one of claims 1 to 7, **characterised in that** it further comprises storage by at least one buffer memory of the plurality of inputs and, in at least one other buffer, of the plurality of outputs of each specialised neuron of the network.

9. Method according to one of claims 1 to 8, **characterised in that** acquisition by sampling is carried out on two input signals.

10. Method according to one of claims 1 to 9, **characterised in that** it is applied in a certain monotrack schema on another item of equipment making it possible to demodulate a monotrack linear modulation signal, compensating: the amplification of the signal, its phase, its carrier leakage, the effects of the propagation channel.

**11.** Method according to one of claims 1 to 9, **characterised in that**, on initialisation of the computer system constituting a demodulator, parameters $\theta_i$ are provided by default by a memory of the system, in the first moments of execution of the method, the system allowing convergence of the parameters $\theta_i$ towards relevant values.

**12.** Method according to one of claims 1 to 9, **characterised in that**, when the distances between the calculated values and the stored values p and defining a neighbourhood are lower than certain thresholds pre-stored by the device, the outputs of the device are then delivered to an appliance.

**13.** Computer program product implemented on a storage medium, executed within a computer processing unit, that is, by hardware or a hardware and firmware combination, and comprising instructions for the execution of a method according to any one of the preceding claims.

**14.** Use of a system of blind demodulation of a telecommunication signal, the system comprising at least one network of specialised neurons each defining respectively filtering by a first specialised neuron, amplification gain by a second specialised neuron, the frequency of the digital telecommunication signal by a third specialised neuron, and the phase value of the signal by a fourth specialised neuron; for the execution of a method according to any one of claims 1 to 12.

**Figure 1**

**Figure 2**

**Figure 3**

**Figure 4**

**Figure 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3030964

**Littérature non-brevet citée dans la description**

- **S. BAREMBRUCH.** Méthodes approchées de maximum de vraisemblances pour la classification et identification aveugles en communications numériques. Telecom ParisTech, 07 Mars 2011

- **E. PUNSKAYA.** Sequential Monte Carlo methods for digital communications. université de Cambridge, 2003